# EUROPEAN PATENT APPLICATION

(11) **EP 4 837 828 A1**
(43) Date of publication of application: **11.11.2026**
(21) Application number: 26176975.6
(22) Date of filing: 06.05.2026
(51) Int. Cl.: B62K 25/02, B62M 6/65

(54) **A REINFORCED STRUCTURE FOR THE AXLE HOLE OF THE REAR FORK OF AN ELECTRIC BIKE**

(30) Priority: 08.05.2025 CN 202520900794 U
(71) Applicant: Suzhou Jinqiutiao Technology Co., Ltd., Kunshan, Jiangsu (CN)
(72) Inventor: CHU, SHIH-CHIEH, 251402 New Taipei City (TW); LI, MAO-ZHEN, 251402 New Taipei City (TW)
(74) Representative: Tahtadjiev, Konstantin

(57) **Abstract**

The invention discloses a reinforced structure for the axle hole of the rear fork of an electric bike. On the inner sides of the axle hole of the rear fork on both sides of the frame of electric bike, accommodating grooves are provided. A motor anti-rotation tab is arranged in the accommodating groove of the axle hole of the left rear fork, and the right rear fork accommodating groove is connected with a dropout. The motor anti-rotation tab is provided with a first through hole for a shaft to pass through, and the first through hole is coaxial with the axle hole of the left rear fork. Compared with the existing technologies, the invention has the advantages of improving the strength and durability of the axle hole of the rear fork of frame of electric bike, and being convenient for maintenance and replacement

## Description

### Technical Field

The present invention relates to the technical field of electric bikes, and in particular to reinforced structure for the axle hole of the rear fork of an electric bike.

### Background of Invention

During the manufacturing of traditional electric bikes, the frame is usually made of alloy material to meet the basic requirements of strength and durability. However, with the continuous development of the lightweight trend of electric bikes, high-end electric bikes are increasingly made with the frame using carbon fiber material. Carbon fiber frames are widely favored for their advantages of light weight and high strength, but they also have certain structural shortcomings.

For example, at the axle hole of the rear fork of an electric bike with a carbon fiber frame, since the axle hole of the rear fork is used to fix the wheel axle, especially in electric bikes with a rear wheel hub motor, the weight of the hub motor and the torque generated during riding act directly on the axle hole position of the rear fork through the axle, easily causing damage or cracking of the axle hole. This type of damage not only affects the service life of the frame but may also compromise riding safety. Furthermore, since carbon fiber materials cannot be effectively repaired through traditional welding or other repair methods, once the axle hole is damaged, the entire frame usually needs to be replaced, resulting in significant financial loss and resource waste for the user.

Therefore, to address the strength issue of the axle hole of rear fork in carbon fiber frames for electric bikes, there is an urgent need to provide an effective reinforcement structure to enhance the durability of this part, extend the frame's service life, and reduce maintenance costs. Solving this problem will significantly improve the reliability and user experience of carbon fiber electric bikes.

### Summary of Invention

To solve this problem, the present invention proposes a reinforced structure for the axle hole of the rear fork of an electric bike. It comprises of a frame of electric bike with a rear fork. It has following features: On the inner sides of the axle hole of the left and rear fork on the frame of electric bike, accommodating grooves are provided. A motor anti-rotation tab is arranged in the accommodating groove, and the motor anti-rotation tab is provided with a first through hole for a shaft to pass through, and the first through hole is coaxial with the axle hole of the left rear fork.

Further, the accommodating groove is provided with a first locking hole, the motor anti-rotation tab is provided with a second locking hole, and the first locking hole corresponds to the second locking hole; it further comprises of a locking component, the locking component is locked into the aforesaid second locking hole and the first locking hole, and the motor anti-rotation tab is fixed in the accommodating groove.

Further, the accommodating groove is further provided with a positioning recess, the motor anti-rotation tab is provided with a positioning boss, and the positioning recess matches and corresponds to the positioning boss.

Further, the motor anti-rotation tab comprises a locking boss, the first through hole passes through the locking boss, a first internal thread is provided in the first through hole, and the locking boss is inserted into the shaft hole of left rear fork; it further comprises of a first fixing screw, the first fixing screw is provided with a first external thread and a first screw through hole passes through the center of the first fixing screw, the first fixing screw is inserted into the shaft hole of rear fork from the outside of the shaft hole of rear fork, and the first external thread of the first fixing screw is locked and fixed with the first internal thread of the first through hole.

Further, an accommodating groove is also provided on the inner side of the axle hole of right rear fork of the frame of electric bike, and the right rear fork accommodating groove is connected with a dropout.

Further, the dropout includes a connecting boss, a connecting through hole passes through the center of the connecting boss, the connecting through hole is provided with a second internal thread, and the connecting boss is inserted into the axle hole of right rear fork; it further comprises of a second fixing screw, the second fixing screw has a second screw through hole and the second fixing screw is provided with a second external thread, the second fixing screw is inserted through the axle hole of right rear fork from the outside of the right rear fork, and the second external thread of the second fixing screw is locked and fixed with the second internal thread.

Further, the frame of electric bike is made of carbon fiber material.

Further, the motor anti-rotation tab is made of aluminum alloy material.

Compared with the existing technologies, the invention has the advantages that:
(1) Improving strength and durability: By providing an aluminum alloy motor anti-rotation tab at the shaft hole of rear fork of the frame of electric bike, the strength of the shaft hole is effectively enhanced, avoiding damage or cracking caused by the force of the wheel axle, thereby improving the durability of the frame.
(2) Easy maintenance and replacement: The motor anti-rotation tab is fixed at the shaft hole of rear fork through the accommodating groove and locking component or through the first fixing screw. If it is damaged, only the motor anti-rotation tab needs to be replaced, without the need of replacing the entire frame, significantly reducing maintenance costs and resource waste.
(3) Meeting high-end market demand: This design fully addresses the pain points of carbon fiber frames in actual use, improves the reliability and user experience of the frame, and meets the comprehensive demand for lightweight feature and high performance in the high-end electric bike market.

Therefore, the invention has significant advantages in improving the reliability of carbon fiber frames for electric bikes, extending service life, reducing maintenance costs, and optimizing user experience.

### Description of Drawings

FIG. 1 is a schematic structural diagram of a frame of electric bike according to Embodiment 1 of the invention.
FIG. 2 is a structural diagram of the rear fork position of the frame of electric bike according to Embodiment 1 of the invention.
FIG. 3 is a schematic structural diagram at the shaft hole of rear fork according to Embodiment 1 of the invention.
FIG. 4 is a schematic diagram of the shaft hole of rear fork from another angle according to Embodiment 1 of the invention.
FIG. 5 is a schematic structural diagram of Embodiment 2 and Embodiment 3 of the invention.
FIG. 6 is a schematic structural diagram of Embodiment 2 and Embodiment 3 from another angle of the present invention.
FIG. 7 is a schematic structural diagram of the motor anti-rotation tab according to Embodiment 2 of the invention.
FIG. 8 is a schematic structural diagram of the dropout according to Embodiment 2 of the invention.

**Reference Numerals**

| | | | |
|---|---|---|---|
| 100 | Frame of electric bike | 113 | First locking hole |
| 110 | Left rear fork | 114 | Positioning recess |
| 120 | Right rear fork | 13 | Motor anti-rotation tab |
| 111 | Shaft hole of left rear fork | 130 | First through hole |
| 112 | Accommodating groove | | |
| 131 | Second locking hole | 24 | First Fixing Screw |
| 132 | Positioning boss | 240 | First Screw Through Hole |
| 14 | Locking component | 241 | First External Thread |
| 210 | Left rear fork | 25 | Shaft |
| 211 | Shaft hole of left rear fork | 26 | Dropout |
| 212 | Accommodating groove | | |
| 220 | Right rear fork | 260 | Connecting Through Hole |
| 221 | Shaft hole of right rear fork | 261 | Second Internal Thread |
| 222 | Accommodating groove | 262 | Connecting Boss |
| 23 | Motor Anti-Rotation Tab | 27 | Second Fixing Screw |
| 230 | First Through Hole | 270 | Second Screw Through Hole |
| 231 | Locking Boss | 271 | Second External Thread |
| 232 | First Internal Thread | | |

### Description

In the description of the present invention, it should be understood that terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", etc., indicate orientations or positional relationships based on the drawings. They are used solely for convenience in describing the present invention and simplifying the description, and do not indicate or imply that the referenced device or element must have a specific orientation, be constructed and operated in a specific orientation, and therefore cannot be construed as limiting the present invention.

In the description of the present invention, "multiple" means two or more, unless otherwise explicitly and specifically defined.

In the description of the present invention, it should be noted that, unless otherwise explicitly specified and limited, terms such as "installed", "provided with", "set/jointed with", "connected", etc., should be understood broadly. For example, "connected" can be a fixed connection, a detachable connection, or an integral connection; also, it can be a mechanical connection or an electrical connection; further, it can be a direct connection or an indirect connection through an intermediate medium, and it can be internal communication between two elements as well. For those of ordinary skill in the technology, the specific meanings of the above terms in the present invention can be understood on a case-by-case basis.

### Embodiment 1

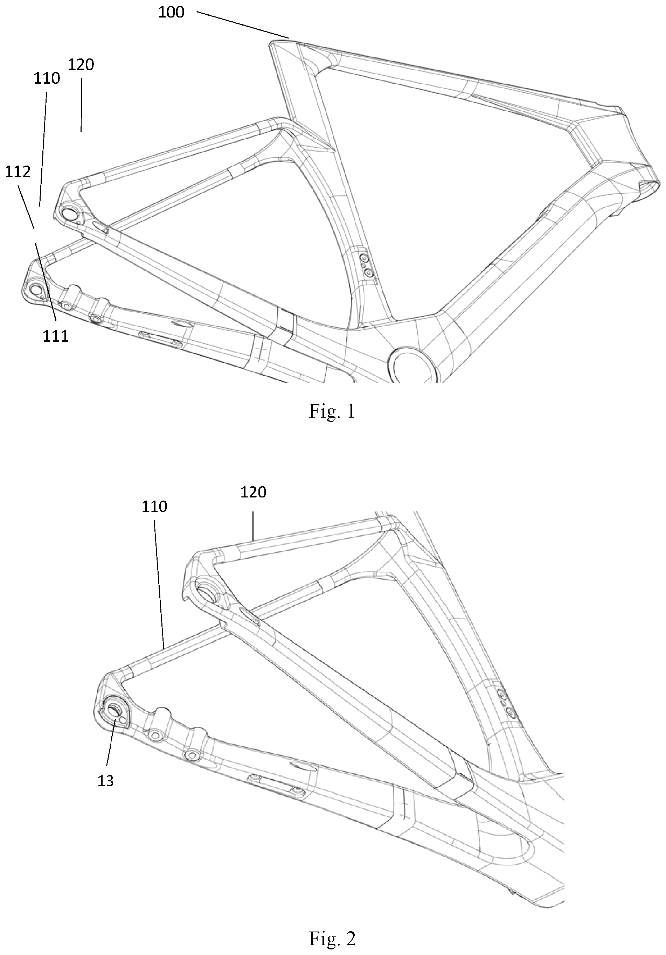

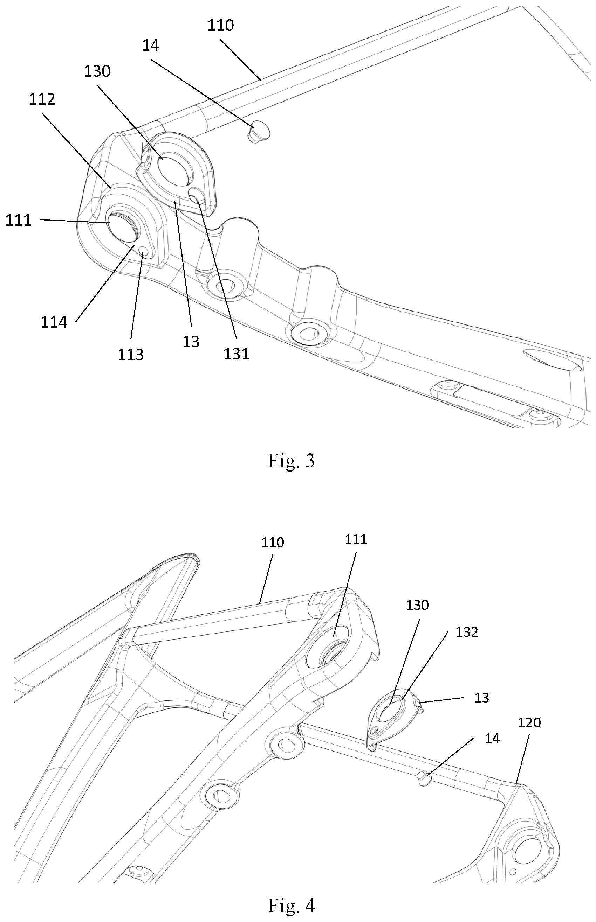

Please refer to Fig. 1-4, which show a first embodiment proposed by the present invention, a reinforced structure for the axle hole of the rear fork of an electric bike, including a frame 100 of electric bike. The frame of electric bike 100 includes a left rear fork 110 and a right rear fork 120. In this embodiment, the frame of electric bike is made of carbon fiber material. A accommodating groove 112 is provided at the axle hole 111 of left rear fork of the frame 100 of electric bike. A motor anti-rotation tab 13 is provided within the accommodating groove 112. The motor anti-rotation tab 13 is provided with a first through hole 130 for the wheel axle to pass through. Additionally, a first locking hole 113 is also provided in the accommodating groove 112, and the motor anti-rotation tab 13 is provided with a second locking hole 131. A locking component 14 can lock and fix the motor anti-rotation tab 13 in the accommodating groove 112 through the second locking hole 131 and the first locking hole 113. This locking method not only achieves stable installation of the motor anti-rotation tab 13 but also facilitates subsequent disassembly and replacement, reducing maintenance costs and resource waste. In this embodiment, the motor anti-rotation tab 13 is made of aluminum alloy material, which has excellent strength and machinability. As a reinforced structural material, it can greatly improve the durability at the shaft hole 111 of left rear fork, effectively solving the problem of carbon fiber materials being prone to damage at this location.

To allow the motor anti-rotation tab 13 to be quickly and stably placed in the accommodating groove 112, the accommodating groove 112 is further provided with a positioning recess 114, and the motor anti-rotation tab 13 is provided with a positioning boss 132. The positioning recess 114 matches the positioning boss 132. This structural design ensures precise positioning of the motor anti-rotation tab 13, prevents misalignment during installation, and further enhances the installation firmness of the motor anti-rotation tab 13, ensuring it does not loosen during use.

### Embodiment 2

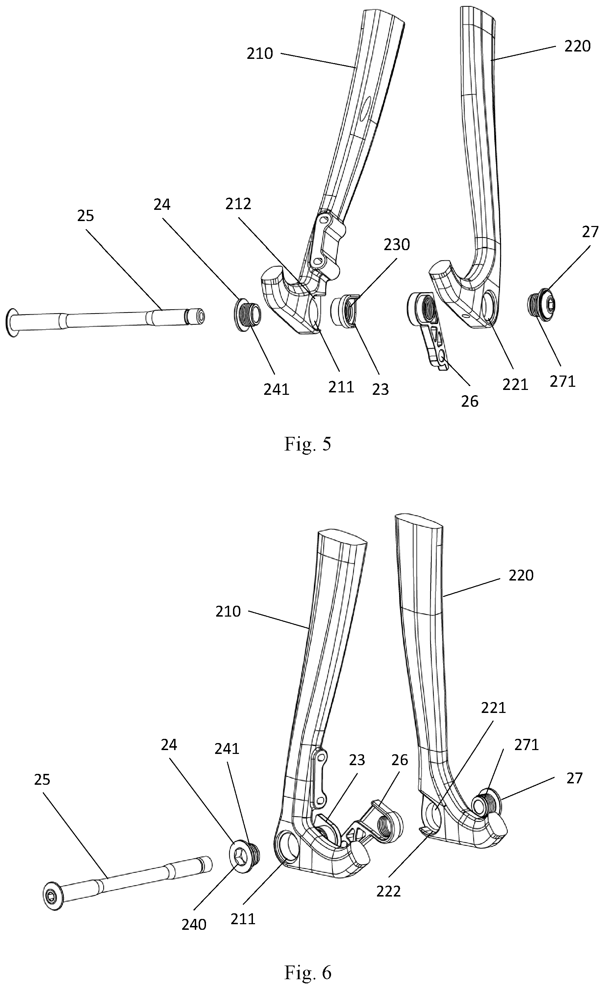

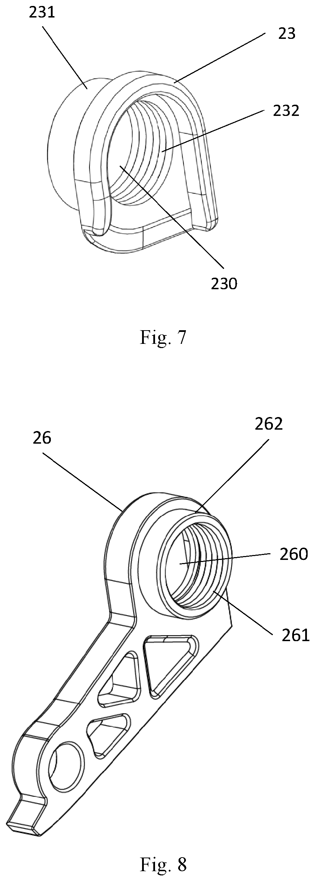

Please refer to Fig. 5-8, which show the second embodiment of the present invention. Structures not mentioned in this embodiment are the same as those in Embodiment 1 and will not be described again here. In this embodiment, the motor anti-rotation tab 23 includes a locking boss 231. A first through hole 230 passes through the locking boss 231. A first internal thread 232 is provided inside the first through hole 230. The locking boss 231 is inserted into the shaft hole 211 of left rear fork. Furthermore, a first fixing screw 24 is included. The first fixing screw 24 is provided with a first external thread 241, and a first screw through hole 240 passes through the center of the first fixing screw 24. The first fixing screw 24 is inserted into the shaft hole 211 of left rear fork from the outside of the shaft hole 211 of left rear fork, and the first external thread 241 of the first fixing screw 24 is locked and fixed with the first internal thread 232 of the first through hole 230. Thereby, the motor anti-rotation tab 23 can be fixed in the accommodating groove 212 of the shaft hole 211 of left rear fork by the first fixing screw 24. The first through hole 230 and the first screw through hole 240 are used for the shaft rod 25 to pass through.

In use, when the rear wheel with the motor is installed between the left and right rear forks 210, 220 of the frame, the shaft rod 25 can pass from the outside of the left rear fork 210 through the first screw through hole 240 of the first fixing screw 24, then through the first through hole 230 of the motor anti-rotation tab 23, and then through the motor center shaft and the shaft hole of right rear fork, so that the rear wheel with the motor can be fixed between the two rear forks 210, 220.

### Embodiment 3

Please continue to refer to Fig. 5-8. On the inner side of the axle hole 221 of right rear fork of the frame of electric bike, there is also a accommodating groove 222, and the accommodating groove 222 of the right rear fork 220 is connected to a dropout 26. The dropout 26 includes a connecting boss 262, with a connecting through hole 260 running through the center of the connecting boss 262. The connecting through hole 260 is provided with a second internal thread 261. The connecting boss 262 is inserted into the axle hole 221 of right rear fork. It further includes a second fixing screw 27, which has a second screw through hole 270 running through it and is provided with a second external thread 271. The second fixing screw 27 is inserted from the outside of the right rear fork 220 into the axle hole 221 of right rear fork, and the second external thread 271 of the second fixing screw 27 is locked and fixed with the second internal thread 261.

In the reinforced structure for the axle hole of the rear fork of an electric bike of the present invention, the frame 100 of electric bike is made of carbon fiber material. With the lightweight feature and high-strength performance of carbon fiber material, the overall weight of the electric bike can be reduced. Through the combination of the carbon fiber frame and the aluminum alloy motor anti-rotation tabs 13 and 23, both light weight and strength requirements are addressed. It provides an effective solution specifically for the vulnerable issue of the axle hole of left and right rear forks, significantly improving the reliability of the frame and user experience.

These are the basic principles, main features, and advantages of the present invention. Those skilled in the industry should understand that the present invention is not limited by the above embodiments. The embodiments and descriptions in the specification are merely preferred examples of the present invention and are not intended to limit the present invention. Without departing from the spirit and scope of the present invention, various changes and improvements may be made to the model, and these changes and improvements all fall within the scope of the present invention as claimed. The scope of protection claimed by the present invention is defined by the appended claims and their equivalents.

## Claims

1. A reinforced structure for the axle hole of the rear fork of an electric bike comprises of a frame of electric bike with a rear fork, and it has following features: On the inner sides of the axle hole of the left and rear fork on the frame of electric bike, accommodating grooves are provided. A motor anti-rotation tab is arranged in the accommodating groove, and the motor anti-rotation tab is provided with a first through hole for a shaft to pass through, and the first through hole is coaxial with the axle hole of the left rear fork.

2. The reinforced structure for the axle hole of the rear fork of an electric bike as specified in claim 1 has following features: the accommodating groove is provided with a first locking hole, the motor anti-rotation tab is provided with a second locking hole, and the first locking hole corresponds to the second locking hole; it further comprises of a locking component, the locking component is locked into the aforesaid second locking hole and the first locking hole, and the motor anti-rotation tab is fixed in the accommodating groove.

3. The reinforced structure for the axle hole of the rear fork of an electric bike as specified in claim 2 has following features: the accommodating groove is further provided with a positioning recess, the motor anti-rotation tab is provided with a positioning boss, and the positioning recess matches and corresponds to the positioning boss.

4. The reinforced structure for the axle hole of the rear fork of an electric bike as specified in claim 1 has following features: the motor anti-rotation tab comprises a locking boss, the first through hole passes through the locking boss, a first internal thread is provided in the first through hole, and the locking boss is inserted into the shaft hole of left rear fork; it further comprises of a first fixing screw, the first fixing screw is provided with a first external thread and a first screw through hole passes through the center of the first fixing screw, the first fixing screw is inserted into the shaft hole of rear fork from the outside of the shaft hole of rear fork, and the first external thread of the first fixing screw is locked and fixed with the first internal thread of the first through hole.

5. The reinforced structure for the axle hole of the rear fork of an electric bike as specified in claim 1 has following features: further, a accommodating groove is also provided on the inner side of the axle hole of right rear fork of the frame of electric bike, and the right rear fork accommodating groove is connected with a dropout.

6. The reinforced structure for the axle hole of the rear fork of an electric bike as specified in claim 5 has following features: the dropout includes a connecting boss, a connecting through hole passes through the center of the connecting boss, the connecting through hole is provided with a second internal thread, and the connecting boss is inserted into the axle hole of right rear fork; it further comprises of a second fixing screw, the second fixing screw has a second screw through hole and the second fixing screw is provided with a second external thread, the second fixing screw is inserted through the axle hole of right rear fork from the outside of the right rear fork, and the second external thread of the second fixing screw is locked and fixed with the second internal thread.

7. The reinforced structure for the axle hole of the rear fork of an electric bike as specified in claim 1 has following feature: the frame of electric bike is made of carbon fiber material.

8. The reinforced structure for the axle hole of the rear fork of an electric bike as specified in claim 1has following feature: the motor anti-rotation tab is made of aluminum alloy material.
